Europäisches Patentamt

European Patent Office

Office européen des brevets

(11) Publication number: **0 181 077 B1**

(19)

## EUROPEAN PATENT SPECIFICATION

(45) Date of publication of patent specification: **04.12.91**

(51) Int. Cl.⁵: **G11B 7/24**, G11B 7/26, G11B 7/007

(21) Application number: **85306770.0**

(22) Date of filing: **24.09.85**

(54) **Optical type information recording medium and manufacturing method thereof.**

(30) Priority: **30.10.84 JP 228506/84**

(43) Date of publication of application:
**14.05.86 Bulletin 86/20**

(45) Publication of the grant of the patent:
**04.12.91 Bulletin 91/49**

(84) Designated Contracting States:
**DE FR GB NL**

(56) References cited:
| | |
|---|---|
| **EP-A- 0 023 102** | **EP-A- 0 033 046** |
| **EP-A- 0 062 975** | **EP-A- 0 098 046** |
| **EP-A- 0 107 913** | **EP-A- 0 123 409** |
| **DE-A- 3 038 533** | **DE-A- 3 306 538** |

(73) Proprietor: **KABUSHIKI KAISHA TOSHIBA
72, Horikawa-cho Saiwai-ku
Kawasaki-shi Kanagawa-ken(JP)**

(72) Inventor: **Takeoka, Yoshikatsu c/o Patent Division
Kabushiki Kaisha Toshiba 1-1 Shibaura
1-chome
Minato-ku Tokyo 105(JP)**
Inventor: **Ozawa, Norio c/o Patent Division
Kabushiki Kaisha Toshiba 1-1 Shibaura
1-chome
Minato-ku Tokyo 105(JP)**
Inventor: **Yasuda, Nobuaki c/o Patent Division
Kabushiki Kaisha Toshiba 1-1 Shibaura
1-chome
Minato-ku Tokyo 105(JP)**

(74) Representative: **Freed, Arthur Woolf et al
MARKS & CLERK 57-60 Lincoln's Inn Fields
London WC2A 3LS(GB)**

EP 0 181 077 B1

## Description

The present invention relates to an optical type information recording medium for optically recording information in response to radiation of a laser beam, and, more particularly, to an optical type information recording medium for recording information by forming local projections on a recording layer upon radiation of a write laser beam, and a manufacturing method therefor.

A conventional optical disk is known as an optical type recording medium having a recording layer which is locally projected in response to a laser beam. A typical recording layer of the optical disk of this type comprises a metal layer for absorbing laser beam energy, and an interlayer which is made of an organic material and which emits a gas component in response to beam energy. In general, the energy absorbing metal layer is locally heated to indirectly heat and decompose the organic interlayer which then generates a gas contained therein. A surface of the metal layer then acquires local projections as a result of the pressure of the gas produced from the organic interlayer. When a pulsated write laser beam, representing digital information, irradiates the optical disk, continuous concentric or spiral protuberances are formed on the surface of the metal layer in accordance with the mechanism described above, thereby storing the digital information.

According to the conventional optical disk of this type, the organic interlayer is indirectly heated and the utilization efficiency of the laser beam is greatly degraded. A high power laser beam must be used to form projections, resulting in inconvenience. Since the recording layer comprises a multilayer structure, the manufacturing process is so complicated as to decrease the manufacturing yield.

In order to solve the above problem, another conventional optical disk has been developed wherein metallic clusters are dispersed in a hydrocarbon matrix in a recording layer. According to the optical disk of this type, the metallic clusters absorb beam energy upon radiation of a laser beam, and the hydrocarbon matrix emits a gas, thereby locally forming protuberances on the surface of the recording layer.

According to the optical disk described above, the structure of the recording layer is simplified to improve the utilization efficiency of the laser beam. However, it is difficult to properly control the relationship between the energy intensity of the laser beam and the amount of gas produced from the organic layer, thereby decreasing productivity of such optical disks. For example, when the energy intensity of the write beam is too high, the recording layer immediately bursts. Conversely, when the beam intensity is too low, the production of gas from the recording layer is insufficient to result in proper projection of the recording layer. An optimal (allowable) range of the beam intensity is thus narrowed, restricting the laser unit design. The amount of gas produced from the recording layer also depends on the ratio of the hydrocarbon matrix to the metallic clusters. Therefore, it is difficult to determine an optimal beam intensity. In order to perform proper information recording, a strict relationship between the ratio of the hydrocarbon matrix to the metallic cluster in the recording layer and the beam intensity must be established. When the manufacturing process control is restricted to obtain the necessary ratio, the yield of the disks may be limited, i.e., productivity may be lowered, resulting in high cost. The drawback of the conventional optical disk is due to insufficient thermal stability of the hydrocarbon matrix.

EP-A-0107913 discloses a recording medium in which a protuberance is formed thereon in response to radiation, when the radiation, with an intensity which changes in accordance with recording information, is incident thereon. In this recording medium, a single recording layer is formed on a substrate, absorbs energy of the irradiation, emits a gas component in accordance with an absorption energy level and partially projects due to a pressure of the gas component to form the protuberance on the recording layer.

It is, therefore, an object of the present invention to provide a new and improved optical type information recording medium facilitating stable information recording even if incident radiation energy levels vary.

A medium according to the invention is set out in claim 1.

It is a further object of the present invention to provide a new and improved manufacturing method that will ensure stable information recording even if incident radiation energy levels vary.

A method according to the invention is set out in claim 13

According to the recording medium of the present invention, a single recording layer is formed on a substrate. When a radiation beam irradiates the recording layer such that the beam intensity varies in accordance with recording information, the recording layer absorbs the radiation energy and emits a gas component in accordance with the energy level. A partial projection is caused by the pressure of the gas emitted from the recording layer, thereby forming a protuberance corresponding to the input energy level. The recording layer is formed of a mixture of a heat-resistant insulative material, metallic clusters and organic clusters. The insulative material is nonvolatile and has a high vaporization point, and the metallic clusters absorb radiation energy. The organic clusters produce a gas component in accordance with the level of radiation energy absorbed by the metallic clusters, thereby causing formation of local projections of the insulative material, by the gas pressure, so as to form protuberances on the recording layer.

The recording layer, consisting of a mixture of a heat-resistant insulative material and metallic and organic clusters in the recording medium, can be formed, in a single step, by plasma sputtering. A target body is located essentially opposite to a substrate on which a recording layer is to be deposited in a proper gaseous atmosphere. A plasma is generated between the target body and the substrate to perform plasma sputtering. A plurality of types of clusters including the insulative material clusters constituting the matrix, the metallic clusters and the organic clusters are simultaneously deposited, as a mixture, on the substrate to form the recording layer. When a beam is incident on the recording layer and changed in intensity in accordance with recording information, the radiation energy is absorbed by the metallic clusters such that a gas component is emitted from the organic clusters in accordance with an input energy level. The base layer, consequently, incurs local projections by the pressure of the gas emitted from the recording layer, thereby forming protuberances in accordance with the input radiation energy level. The recording layer of the recording medium has a thermally stable matrix difficult to burst, thereby increasing the allowable range of intensity of an incident laser beam.

The present invention is best understood by reference to the accompanying drawings, in which:

Fig. 1 is a sectional view showing the main part of an optical disk according to a first preferred embodiment of the present invention;

Fig. 2 is a sectional view of an optical disk having a recording layer which incurs local projections upon radiation of a write laser beam on the optical disk, thereby forming a protuberance;

Fig. 3 is a graph showing the change in height of a protuberance as a function of the change in intensity of the write beam, wherein a solid curve 30 represents a change in height of a protuberance when the write beam irradiates the recording layer 12 through a transparent substrate 10, and a broken curve 32 represents a change in a protuberance when the write beam irradiates the recording layer 12 directly;

Fig. 4 is a schematic diagram of a plasma sputtering apparatus for forming the recording layer of the optical disk shown in Fig. 1;

Fig. 5 is a plan view of a target body used when the recording layer is formed on the substrate by the plasma sputtering apparatus of Fig. 4;

Fig. 6 is a sectional view of the target body taken along the line VI - VI of Fig. 5;

Fig. 7 is a plan view showing another target used when a recording layer is formed on the substrate by the plasma sputtering apparatus of Fig. 4; and

Fig. 8 is a sectional view of the target body taken along the line VIII - VIII of Fig. 7.

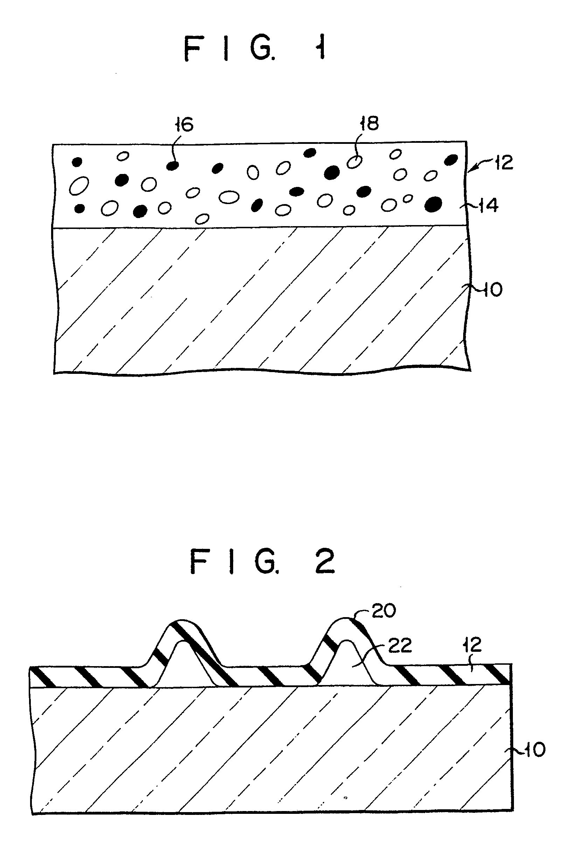

An optical disk according to a embodiment of the present invention will be described with reference to Fig. 1. As shown in the enlarged view of Fig. 1, the optical disk has a transparent substrate 10 of glass or plastic on which a radiation sensitive recording layer 12 formed. It should be noted that only one layer 12 is formed on the substrate 10. The layer 12 has a function of absorbing energy of incident radiation such as a laser beam, a function of emitting a gas component in accordance with a level of absorbed beam energy and a function of forming local projections in response to the pressure of the gas emitted therefrom.

The layer 12 is comprised of a thermally stabilized matrix 14 in a layered form, with both metal clusters 16 and organic clusters 18 dispersed in the matrix 14. For illustrative convenience, the organic clusters 18 are represented, in Fig. 1, by white dots, and the metal clusters 16 are represented by black dots so as to visually distinguish the organic clusters 18 from the metal clusters 16. The matrix 14 is made of a metal oxide which is nonvolatile and has a high vaporization point.

A write laser beam pulsated by a known technique, and representing desired digital information irradiates the layer 12. The metal clusters 16 contained in the layer 12 absorb beam energy by optical absorption such that the metal clusters 16 are heated by absorption of the laser beam energy. The organic clusters 18 adjacent to the heated metal clusters 16 in the matrix 14 are also heated. These clusters 18 are evaporated and generate a gas. The matrix 14 (i.e., the layer 12) projects locally by a pressure of the gas, as shown in Fig. 2, and a protuberance 20 (to be called as a bubble) is formed. The portion represented by reference numeral 22 in Fig. 2 is a cavity formed by a local upward pushing of the layer 12 by the gas pressure, and a peeling of the layer 12 from the substrate 10. Information can be recorded by local projection of the layer 12.

After information is stored in the optical disk in the manner described above, information reproduction (i.e., information readout) is performed by using a read laser beam. The laser power (or laser intensity) of the read laser beam is about 1/5 to 1/10 of the write laser beam. When the read laser beam irradiates the layer 12 having the bubble 20, the intensity of light reflected by (or transmitted through) the bubble 20 differs from that reflected by a flat portion. The difference between the intensities of lights reflected by (or transmitted through) the bubble and the flat portion is detected by a known photosensor, such that original information represented by the bubble 20 can be reproduced. More particularly, in the region of the layer 12 which has the bubble 20, the radiated read beam is diffracted in accordance with the shape of the bubble 20. The intensity of light reflected by the bubble 20 differs greatly from that reflected by a nondeformed portion, i.e., the flat portion. The difference is detected and a reproduction output corresponding to the presence/absence of the bubble 20 is extracted. A reproduction signal having a high carrier-to-noise ratio (known as a CNR to those skilled in the art) can be obtained.

Careful attention should be paid to the following point. Irrespective of whether it is a write or a read beam, the laser beam can be incident on both the substrate 10 and the layer 12. When the write beam irradiates the layer 12 through the substrate 10, the metal clusters 16 located near the boundary between the recording layer 12 and the substrate 10 are heated, and a gas is emitted from the corresponding organic clusters 18. The matrix 14 can, therefore, acquire a local projection, as shown in Fig. 2. Conversely, when the write beam irradiates the layer 12 directly, the metal clusters 16 located near the exposed surface of the layer 12 are heated, and the gas is emitted therefrom. The matrix 14 can, therefore, acquire local projections in the same manner described above.

Materials constituting the layer 12 will be described in detail. When the recording medium is to be stored exposed to air, any humidity-resistant metal oxide can, in the interest of durability, be used for the layer 12. A preferable metal oxide can be selected from Group IIb metal oxides such as ZnO, Group IIIa metal oxides such as $Al_2O_3$, $In_2O_3$ and $Ga_2O_3$; Group IIIb metal oxides such as $Y_2O_3$, Group IVa metal oxides such as $SiO_2$, $GeO_2$ and $SnO_2$; rare earth metal oxides such as $La_2O_3$, $CeO_2$, $Sm_2O_3$, $Gd_2O_3$, $Tb_2O_3$ and $Dy_2O_3$; transition metal oxides such as $TiO_2$, $V_2O_5$, $Cr_2O_3$, $Mn_3O_4$, $MnO_2$, $Fe_2O_3$, $CoO$, $NiO$, $CuO$, $ZrO_2$, $Nb_2O_5$, $MoO_3$, $HfO_2$ and $Ta_2O_5$; or compound metal oxides thereof.

Any metal can be used in the matrix 14 as cluster 16 if it is not excessively active in air so as to effect longevity of the recording medium. When metal clusters are dispersed in the matrix, a metal having little light absorption can be used when a thin film is formed. The cluster metal can be selected from Group IIb metals such as Zn, Group IIIa metals such as Al, Ga and In; Group IIIb metals such as Y, Group IVa metals such as Si, Ge and Sn; Group Va metals such as Sb and Bi, Group VIa metals such as Te, or transition metals such as Ti, V, Cr, Mn, Fe, Co, Ni, Cu, Zr, Nb, Mo, Ru, Rh, Pd, Ag, Hf, Ta, W, Re, Os, Ir, Pt and Au.

Any organic material can be disposed in the matrix 14 if it is decomposed upon radiation of the write laser beam, i.e., if it can be present in a plasma. In general, an organic material is polymerized when it is introduced into a plasma. The organic material disposed in the matrix in the recording layer can be regarded as a polymer. Therefore, the organic material can be a polymer obtained by introducing an organic compound monomer into a plasma and dispersing it as a polymer, or a polymer dispersed in the matrix by plasma sputtering. A compound used as a monomer can be selected from a paraffin compound such as $CH_4$, $C_2H_6$ and $C_3H_8$; an olefin compound such as $C_2H_4$, a benzene, a silicon-containing compound such as $\{Si(CH_3)_3\}_2O$, or a nitrogen-containing compound such as amine and nitrile. The organic material used as the polymer can be selected from nylon, polycarbonate, teflon, vinyl chloride or epoxy resin.

According to the optical disk having the components described above, the layer 12 is not constituted by an organic layer, but by mixing the organic clusters 18 in the metal oxide layer serving as the matrix 14. The metal clusters 16 having a light absorption property are also dispersed in the metal oxide layer 14. With respect to the described optical disk, the margin of incident laser beam power can be increased for the following reason. Even if a laser beam having a higher power than that of the standard laser beam irradiates the layer 12, the layer 12 will not burst, unlike a conventional optical disk having an organic recording layer wherein an excessive amount of generated gas bursts the recording layer so that pits are formed when the incident beam power slightly exceeds the laser beam limit level. According to the optical disk of the present invention, even when the incident beam power exceeds the laser beam level limit and the clusters 18 contained in the matrix 14 are evaporated excessively, the matrix 14 will not burst. This is because the matrix 14 used as the base of the recording layer is thermally and chemically stable and has a higher mechanical strength (durability) than that of an organic layer. Therefore, the upper limit level of the laser intensity need be only roughly determined, resolving the conventional problem that required strict design of the laser generator in the interest of preventing deleterious variations in energy level.

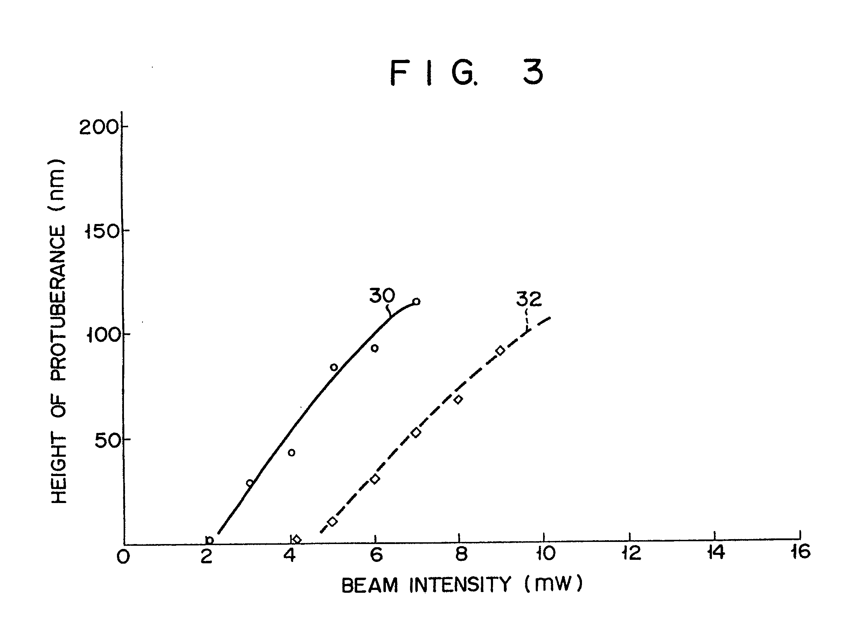

Fig. 3 is a graph showing the change in height of the protuberance formed on the recording layer as a function of the change in beam intensity. A solid curve 30 represents the change in height of the protuberance when the write beam irradiates the layer 12 through the substrate 10. A broken curve 32 represents the change in height of the protuberance when the write beam irradiates the layer 12 directly. The wavelength of the laser beam was 633 nm. Even when the write beam irradiates the layer 12 through the substrate 10, the layer 12 bursts when the beam intensity reaches 8 mW, as is apparent from Fig. 3. This indicates that the upper limit level of the laser intensity can be increased up to 8 mW. The height of the protuberance was as high as $0.17\lambda$ when the wavelength of the laser beam was $\lambda$. This height was, in practice, of a sufficient level for the optical disk. The height of the protuberance can be changed freely by controlling the incident beam power.

According to the optical disk of the present invention, by controlling the content of the clusters 16 in the matrix 14 in the layer 12, the light absorption, with respect to the beam intensity of the laser beam, can be easily controlled. The control of the content of the clusters 16 can be easily practiced during the manufacturing process. The light absorption of mass-produced optical disks can be improved, and a high recording sensitivity can be easily provided. Similarly, by controlling the content of the clusters 18 in the matrix 14 of the layer 12, the amount of gas produced from the layer 12 upon radiation of the predetermined laser beam can be easily controlled. The recording characteristics of optical disks to be mass-produced can be updated variously under given conditions. When the content of the clusters 18 is properly determined, the desired shape of the bubble 20 can be obtained.

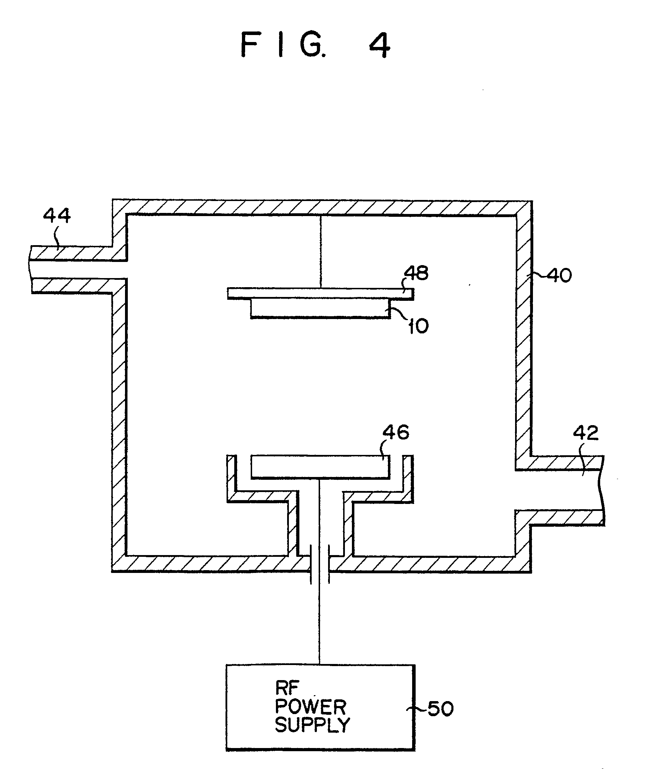

A method of manufacturing the optical disk described above will be described hereinafter. Fig. 4 shows, schematically, a plasma sputtering apparatus for forming the layer 12 of the optical disk. An envelope 40 is evacuated by a known vacuum pump (not shown) through a drain port 42, and is kept in a vacuum. A gas inlet port 44 is formed in the envelope 40. Two electrodes 46 and 48 oppose each other in the envelope 40. The electrode 46 serves as a target electrode to which RF power is supplied from an RF power supply 50. The electrode 48 serves as an electrode for placing the substrate thereon. A glass substrate 10 for the optical disk is placed on the electrode 48.

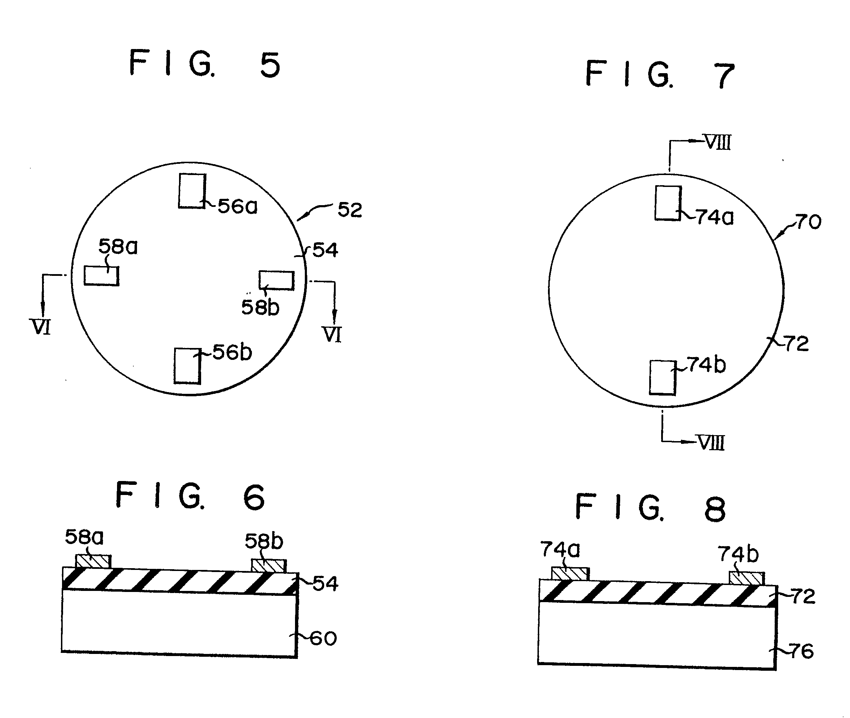

When the layer 12 is formed on the substrate 10, a target 52, shown in Fig. 5, is connected to the electrode 46. The target 52 comprises a disk-like base layer 54 of a metal oxide such as $SiO_2$, two metal (e.g., Ag) pellets 56a and 56b, and two organic pellets 58a and 58b formed on the layer 54. The pellet 56 is made of silver, and the pellet 58 is made of a resin such as teflon. The pellets 56a and 56b are located in the peripheral portion of the base layer so as to oppose each other. The pellets 58a and 58b are also located in the peripheral portion of the base layer so as to oppose each other. The four pellets are located in a cross shape as illustrated so as to improve uniformity of the recording layer.

Fig. 6 shows a sectional structure of the target 52 taken along the line VI - VI of Fig. 5. A plate (to be referred to as a backing plate) 60 is formed on the rear surface of the layer 54. The number of pellets 56a, 56b, 58a and 58b is determined in accordance with the desired contents of clusters 16 and 18 of the layer 12. In this embodiment, since the content of the organic clusters 18 is, preferably, equal to that of the metal clusters 16 in the recording layer 12, the two metal pellets 56a and 56b, and the two organic pellets 58a and 58b are used. However, when the contents of one of the clusters 16 and 18 exceeds that of the other, the number of corresponding pellets can be changed accordingly.

After the envelope 40 is evacuated to a vacuum of $10^{-6}$ Torr, a rare gas such as argon (Ar) is introduced into the envelope 40 through the port 44. The flow rate of the gas is controlled such that the internal pressure of the envelope 40 is set to be $10^{-3}$ to $10^{-2}$, e.g., $10^{-2}$ Torr (0,133 to 1,33 Pa). Under this condition, 13.56 MHz RF power is supplied from the generator 50 to the electrode 46, and a plasma is generated between the electrodes. $SiO_2$ molecules are, consequently, emitted from the metal oxide layer 54 to the substrate 10. At the same time, silver atoms and teflon molecules are emitted from the pellets 56 and 58, respectively, to the substrate 10. These particles are deposited on the substrate 10 placed on the electrode 48. The layer 12, having an $SiO_2$ matrix uniformly containing silver and teflon clusters, is formed on the substrate 10. The $SiO_2$ matrix and the silver and teflon clusters are formed by surface migration of emitted molecules and atoms. The substrate 10 is, preferably, rotated at an equal speed on an identical plane during plasma sputtering. As a result, a uniform recording layer 12 can be formed on the substrate 10.

Figs. 7 and 8 show a modification of a target used when the layer 12 is formed by plasma sputtering. According to the target 70 shown in Fig. 7, a disk-like target layer 72 of a metal oxide such as CoO can be used. Two metal pellets 74a and 74b of indium (In) are formed on the layer 72. The pellets 74a and 74b are located in the peripheral portion of the target surface so as to oppose each other. As shown in Fig. 8, the plate 76 is formed on the rear surface of the layer 72. The number of indium pellets 74a and 74b is properly determined in accordance with the content of clusters in the metal oxide matrix in the layer 12.

A method of forming the layer 12 of Figs. 7 and 8 on the substrate 10 by plasma sputtering will be described hereinafter. The electrode 46 in the envelope 40 of Fig. 4 is connected to the target 70, and the envelope 40 is evacuated. A gas mixture of a monomer compound gas such as $CH_4$ and a rare gas such as argon (Ar) is supplied to the envelope 40 through the port 44. When a plasma is generated by using RF power in the same manner as described above, a metal oxide matrix containing indium clusters and organic clusters of a polymer derived from a monomer compound gas (i.e., the recording layer) is deposited on the substrate 10 opposite the target 70. It should be noted that the recording layer is formed on the substrate 10 by a single sputtering process.

According to the manufacturing method described above, the contents of the metal and organic clusters contained in the metal oxide layer can be easily and accurately controlled. Therefore, a recording layer having a desired light absorption coefficient and proper protuberance efficiency can be manufactured. The light absorption coefficient of the recording layer can be set at a proper value falling within the range of 5% to 90%. In the case of the information recording medium of the present invention, light reflectivity decreases when the light absorption coefficient is increased. Reflected light, instead of transmitted light, is used, in practice, for reproducing information. It is preferable that the light absorption coefficient be about 50%, and the light reflectivity be about 40%. For this purpose, a volume ratio of metal cluster to the metal oxide matrix should, preferably, be 10% or more.

The fact that the content of the organic clusters contained in the metal oxide layer can be easily and accurately controlled indicates that the total amount of gas generated from the layer 12 upon radiation by the write laser beam can be properly adjusted, and that the bubble 20 can be desirably shaped. When the content of the organic clusters and the amount of gas generated from the layer 12 are insufficient, the intensity of read light reflected by (transmitted through) the bubble 20 does not differ greatly from that reflected by the flat portion. In this case, a reproduction output signal having a high carrier-to-noise ratio, i.e., CNR, cannot be expected. However, when the content of the organic clusters and the amount of gas generated from the layer 12 are excessive, the recording layer tends to burst when the write laser beam intensity varies. Based on the above assumptions, it is preferable that the content of the organic clusters in the recording layer not exceed the overall volume of the metal oxide matrix, and have a volume ratio of 5% or more with respect to the matrix.

The metal cluster size contained in the layer 12 is, preferably, small. When the cluster size is small, the shape of the bubble 20 can be accurately controlled. In other words, high-density recording can be performed. For this reason, the metal cluster size is set at 50 nm or less. When the method described above is employed, the metal cluster size can easily be formed at 50 nm or less. Metal atoms emitted by plasma sputtering to the substrate 10 migrate and will not grow into large particles since metal oxide molecules and organic molecules (radicals) are also emitted onto the substrate surface. As a result, the metal cluster size is kept at substantially 50 nm or less.

The present invention will be described in detail by way of Examples.

## Example 1

An RF (radio-frequency) diode plasma sputtering apparatus having an 8" $SiO_2$ target was used. A plurality of Ag pellets occupying 30% of the total area of the target, and a plurality of teflon pellets occupying 10% of the total area of the target were placed on the target. A glass substrate was placed on the counter electrode. The envelope of the sputtering apparatus was evacuated to a vacuum of $1 \times 10^{-5}$ Torr (1,33 m Pa). Ar gas was supplied to set an internal pressure of the envelope at $2 \times 10^{-2}$ Torr (2,66 Pa). 400-W RF power (13.56 MHz) was supplied to the opposing electrodes to generate a plasma. And a recording layer was formed on the substrate to a thickness of 100 nm after 10 minutes.

The prepared information recording medium was rotated at a speed of 600 rpm. Pulsed laser beam spots, as the write laser beam, having a size of 1 $\mu$m and an output of 10 mW, repeatedly irradiated the recording layer through the substrate from a GaAℓAs semiconductor layer diode (oscillation wavelength of 830 nm) at a repetition frequency of 8 MHz. A continuous laser beam, as the read laser beam, having an output of 0.5 mW irradiated the recording layer. Light reflected by the recording layer was detected. A CNR of the reproduction output was as high as 60 dB.

When a scanning type electron microscope was used to observe the recording layer surface of the recorded information recording medium, each bubble was found to have a size of about 2 x 1 $\mu$m at the bottom thereof, and a height of about 50 nm.

As a comparison, a recording layer was formed under the same conditions as in Example 1, except that the teflon pellets were not formed on the $SiO_2$ target to prepare an information recording medium. Recording was then performed. No bubbles were, however, formed on the recording layer.

## Example 2

An RF diode plasma sputtering apparatus having an 8" $Y_2O_3$ target was used. A plurality of Bi pellets occupying 40% of the total area of the $Y_2O_3$ target were placed thereon. A glass substrate was placed on the counter electrode. A gas mixture was supplied at a flow rate ratio of $O_2/CH_4/Ar$ = 10/40/50 to set the internal pressure of the envelope at $5 \times 10^{-2}$ Torr (6,8 Pa). 500-W RF power (13.56 MHz) was supplied to the opposing electrodes to generate a plasma. A recording layer was formed on the substrate to a thickness of 50 nm after 10 minutes.

The prepared information recording medium was rotated at a speed of 600 rpm in the same manner as in Example 1. A laser beam, as the write beam, irradiated the recording layer through the substrate from a GaAℓAs semiconductor laser diode (oscillating wavelength of 830 nm) of an output of 10 mW and a pulse width of 1/8 MHz, to perform recording. Each bubble was found to have a size of about $2 \times 1$ $\mu$m at the bottom thereof, and a height of about 60 nm.

A recording layer was deposited on halite under the same conditions as Example 2 and, subsequently, peeled from halite. The resultant recording layer was observed by a transmission electron microscope. Bi clusters were found to be uniformly dispersed in the $Y_2O_3$ matrix. The size of the Bi clusters was about 300 Å (30nm). The deposition ratio of Bi clusters in the $Y_2O_3$ matrix was about 50%. Thermogravimetric analysis was performed on powder obtained from the prepared recording layer and an exothermic reaction was found to correspond to gas emission at a temperature of $200°$ C.

Example 3

An RF diode plasma sputtering apparatus having an 8" $Aℓ_2O_3$ target was used. A plurality of Ti pellets corresponding to 40% of the total area of the $Aℓ_2O_3$ target, and a plurality of nylon pellets corresponding to 15% thereof were placed on the $Aℓ_2O_3$ target. A glass substrate was placed on the counter electrode. Ar gas was supplied to the envelope to set its internal pressure at $5 \times 10^{-2}$ Torr (6.8. Pa). 400-W RF power (13.56 MHz) was supplied to the opposing electrodes to generate a plasma, thereby depositing a recording film.

Recording was performed under the same conditions as in Example 1. Bubbles were observed by a scanning electron microscope. Each bubble was found to have a size of about $1.5 \times 1$ $\mu$m at the bottom thereof, and a height of about 40 nm.

V, Cr, Mn, Fe, Co, Ni and Cu pellets sequentially replaced the Ti pellet over 50% of the target area to prepare seven information recording media under the same conditions as in Example 3. Recording was performed under the same conditions as in Example 3, and resultant bubbles were observed. Satisfactory bubbles were found to be formed in the respective media.

Although the present invention has been shown and described with reference to particular embodiments, various changes and modifications which are obvious to a person skilled in the art, and to which the invention pertains, are deemed to lie within the scope of the invention.

The matrix of the recording layer comprises a metal oxide in the above embodiment, but is not limited to this. The recording layer matrix must be thermally and chemically stable, have a high mechanical strength and project upwards upon generation of a gas from the organic clusters. The matrix can, therefore, be made of a metal nitride or metal carbonate to obtain the same effect as in the above embodiment.

## Claims

1. A recording medium wherein a protuberance (20) is formed thereon in response to radiation, when the radiation, with an intensity which changes in accordance with recording information, is incident thereon, and a single recording layer (12) is formed on a substrate (10), absorbs energy of the radiation, emits a gas component in accordance with an absorption energy level and partially projects due to a pressure of the gas component to form the protuberance (20) on said single recording layer (12), characterized in that said recording layer (12) comprises a mixture comprising,

   an insulative material (14) which is non-volatile and has a high vaporization point,

   metal clusters (16) which absorb the radiation energy and are heated, and

   organic clusters (18) for producing the gas component upon the heating of said metal clusters (16), causing said insulative material (14) to locally project to form said protuberance on said insulative material (14), said metal and organic clusters (16,18) being dispersed in the insulative material (14).

2. The recording medium according to claim 1, characterized in that said insulative material (14) is locally separated from said substrate (10) by the pressure of the gas component produced from said organic clusters (18) upon radiation, and a cavity (22) is formed between said substrate (10) and said insulative material (14), thereby forming said protuberance (20).

3. The recording medium according to claim 2, characterized in that said protuberance (20) is formed on said recording layer (12) when the radiation is incident on said recording medium from a surface of said recording layer (12), or a surface of said substrate (10).

4. The recording medium according to claim 2, characterized in that said metal clusters (16) are introduced simultaneously when said insulative material (14) is deposited on said substrate (10).

5. The recording medium according to claim 4, characterized in that said organic clusters (18) are introduced simultaneously when said insulative material (14) is deposited on said substrate (10).

6. The recording medium according to claim 5, characterized in that said recording layer (12) produces an amount of the gas component which changes in accordance with a change in content of said organic clusters (18) in said insulative material (14).

7. The recording medium according to claim 5, characterized in that said recording layer (12) changes absorption coefficient of the radiation energy in accordance with a change in content of said metal clusters (16) in said insulative material (14).

8. The recording medium according to claim 7, characterized in that said recording layer (12) produces an amount of the gas component which changes in accordance with both a change in content of said organic clusters (18) in said insulative material (14), and a change in the absorption coefficient of the radiation energy of said metal clusters (16).

9. The recording medium according to claims 1 to 8, characterized in that said insulative material (14) comprises a metal oxide.

10. The recording medium according to claim 9, characterized in that said insulative material (14) comprises an indium oxide.

11. The recording medium according to claims 1 to 8, characterized in that said insulative material comprises a metal nitride.

12. The recording medium according to claims 1 to 8, characterized in that said insulative material comprises a metal carbonate.

13. A method of manufacturing a recording medium wherein a protuberance (20) is formed thereon in response to radiation when the radiation, with an intensity that changes in accordance with recording information, is incident thereon, characterized in that said method comprises the steps of:

placing a substrate (10) in a low-pressure gaseous atmosphere;

placing a target body (52,70) in the gaseous atmosphere to substantially oppose said substrate (10); and

performing plasma sputtering by generating a plasma between said target body (52,70) and said substrate (10) to deposit, on the substrate, a single recording layer (12) consisting of an of an insulative material having, metal clusters (16) and organic clusters (18) dispersed therein, said recording layer (12) being arranged such that, upon radiation, said metal clusters absorb radiation energy, said organic clusters (18) produce a gas component upon heating of said metal clusters (16) due to energy absorption, and said insulative material (14) is locally projected to form a protuberance (20) upon radiation.

14. The method according to claim 13, characterized in that said target body (52) comprises a target layer (54) of an insulative material, at least one metal pellet (56) formed on said target layer (54) and at least one organic pellet (58) formed on said target layer (54), the contents of said metal clusters (16) and said organic clusters (18) contained in said recording layer (12) being controlled by changing the number of metal pellets (56) and the number of organic pellets (58).

15. The method according to claim 13, characterized in that said target body (70) comprises a target layer (72) of an insulative material and at least one metal pellet (74) formed on said target layer (72), the content of said metal clusters (16) contained in said recording layer (12) being controlled by changing the number of metal pellets (74).

16. The method according to claim 13, characterized in that said substrate (10) is rotatably supported in the gaseous atmosphere.

**Revendications**

1. Support d'enregistrement dans lequel une protubérance (20) est formée dessus en réponse à un rayonnement lorsque le rayonnement, dont l'intensité varie en fonction d'une information d'enregistrement, arrive en incidence dessus, et dans lequel une unique couche d'enregistrement (12) est formée sur un substrat (10), absorbe l'énergie du rayonnement, émet un composant gazeux en fonction d'un niveau d'énergie d'absorption et se projette partiellement du fait d'une pression exercée par le composant gazeux pour former la protubérance (20) sur ladite unique couche d'enregistrement (12), caractérisé en ce que ladite couche d'enregistrement (12) comprend un mélange qui comprend :

un matériau isolant (14) qui est non volatile et qui a un point de vaporisation élevé ;

des amas métalliques (16) qui absorbent l'énergie de rayonnement et qui sont chauffés ; et

des amas organiques (18) pour produire le composant gazeux suite au chauffage desdits amas métalliques (16), ce qui fait que ledit matériau isolant (14) se projette localement pour former ladite protubérance sur ledit matériau isolant (14), lesdits amas métalliques et organiques (16, 18) étant dispersés dans le matériau isolant (14).

2. Support d'enregistrement selon la revendication 1, caractérisé en ce que ledit matériau isolant (14) est localement séparé dudit substrat (10) par la pression de le composant gazeux produite à partir desdits amas organiques (18) suite au rayonnement et en ce qu'une cavité (22) est formée entre ledit substrat (10) et ledit matériau isolant (14), formant ainsi ladite protubérance (20).

3. Support d'enregistrement selon la revendication 2, caractérisé en ce que ladite protubérance (20) est formée sur ladite couche d'enregistrement (12) lorsque le rayonnement arrive en incidence sur ledit support d'enregistrement à partir d'une surface de ladite couche d'enregistrement (12) ou à partir d'une surface dudit substrat (10).

4. Support d'enregistrement selon la revendication 2, caractérisé en ce que lesdits amas métalliques (16) sont introduits simultanément au dépôt dudit matériau isolant (14) sur ledit substrat (10).

5. Support d'enregistrement selon la revendication 4, caractérisé en ce que lesdits amas organiques (18) sont introduits simultanément au dépôt dudit matériau isolant (14) sur ledit substrat (10).

6. Support d'enregistrement selon la revendication 5, caractérisé en ce que ladite couche d'enregistrement (12) produit une quantité du composant gazeux qui varie en fonction d'une variation de teneur desdits amas organiques (18) contenus dans ledit matériau isolant (14).

7. Support d'enregistrement selon la revendication 5, caractérisé en ce que ladite couche d'enregistrement (12) change de coefficient d'absorption de l'énergie de rayonnement en fonction d'une variation de teneur desdits amas métalliques (16) contenus dans ledit matériau isolant (14).

8. Support d'enregistrement selon la revendication 7, caractérisé en ce que ladite couche d'enregistrement (12) produit une quantité de composant gazeux qui varie à la fois en fonction d'une variation de teneur desdits amas organiques (18) contenus dans ledit matériau isolant (14) et en fonction d'une variation du coefficient d'absorption de l'énergie de rayonnement par lesdits amas métalliques (16).

9. Support d'enregistrement selon les revendications 1 à 8, caractérisé en ce que ledit matériau isolant (14) comprend un oxyde de métal.

10. Support d'enregistrement selon la revendication 9, caractérisé en ce que ledit matériau isolant (14) comprend un oxyde d'indium.

11. Support d'enregistrement selon les revendications 1 à 8, caractérisé en ce que ledit matériau isolant comprend un nitrure métallique.

12. Support d'enregistrement selon les revendications 1 à 8, caractérisé en ce que ledit matériau isolant comprend un carbonate métallique.

13. Procédé de fabrication d'un support d'enregistrement dans lequel une protubérance (20) est formée dessus en réponse à un rayonnement lorsque le rayonnement, dont l'intensité varie en fonction d'une information d'enregistrement, arrive en incidence dessus, caractérisé en ce que ledit procédé comprend les étapes de :

placement d'un substrat (10) dans une atmosphère gazeuse basse pression ;

placement d'un corps cible (52, 70) dans l'atmosphère gazeuse pour s'opposer sensiblement audit substrat (10) ; et

mise en oeuvre d'une pulvérisation plasma par génération d'un plasma entre ledit corps cible (52, 70) et ledit substrat (10) afin de déposer sur le substrat une unique couche d'enregistrement (12) constituée par un matériau isolant qui comprend des amas métalliques (16) et des amas organiques (18) qui sont dispersés dedans, ladite couche d'enregistrement (12) étant agencée de telle sorte que, suite au rayonnement, lesdits amas métalliques (16) absorbent l'énergie de rayonnement, lesdits amas organiques (18) produisent un composant gazeux suite au chauffage desdits amas métalliques (16) qui est dû à l'absorption d'énergie, et que ledit matériau isolant soit localement projeté pour former une protubérance (20) suite au rayonnement.

14. Procédé selon la revendication 13, caractérisé en ce que ledit corps cible (52) comprend une couche cible (54) réalisée en un matériau isolant, au moins une pastille métallique (56) formée sur ladite couche cible (54) et au moins une pastille organique (58) formée sur ladite couche cible (54), les teneurs desdits amas métalliques (16) et desdits amas organiques (18) contenus dans ladite couche d'enregistrement (12) étant commandées en faisant varier le nombre de pastilles métalliques (56) et le nombre de pastilles organiques (58).

15. Procédé selon la revendication 13, caractérisé en ce que ledit corps cible (70) comprend une couche cible (72) réalisée un matériau isolant et au moins une pastille métallique (74) formée sur ladite couche cible (72), la teneur desdits amas métalliques (16) contenus dans ladite couche d'enregistrement (12) étant commandée en faisant varier le nombre de pastilles métalliques (74).

16. Procédé selon la revendication 13, caractérisé en ce que ledit substrat (10) est supporté à rotation dans l'atmosphère gazeuse.

**Patentansprüche**

1. Aufzeichnungsmedium, auf dem in Abhängigkeit von Strahlung ein Höcker (20) formbar ist, wenn Strahlung einer sich entsprechend Aufzeichnungsinformation ändernden Intensität auf das Aufzeichnungsmedium fällt und eine einzelne, auf einem Substrat (10) geformte Aufzeichnungsschicht Energie der Strahlung absorbiert, in Abhängigkeit vom Absorptionsenergiepegel eine Gaskomponente freisetzt und sich unter einem Druck der Gaskomponente unter Bildung des Höckers (20) auf der einzelnen Aufzeichnungsschicht (12) teilweise anhebt, dadurch gekennzeichnet, daß die Aufzeichnungsschicht (12) ein Gemisch aus einem nichtflüchtigen und einen hohen Verdampfungspunkt aufweisenden Isoliermaterial (14),

Metallklumpen (16), welche die Strahlungsenergie unter Erwärmung derselben absorbieren, und
organischen Klumpen (18) zum Erzeugen der Gaskomponente bei Erwärmung der Metallklumpen (16), um damit das Isoliermaterial (14) sich unter Bildung des Höckers auf dem Isoliermaterial (14) örtlich anheben zu lassen, umfaßt, wobei die Metallklumpen und organischen Klumpen (16, 18) im Isoliermaterial (14) dispergiert sind.

2. Aufzeichnungsmedium nach Anspruch 1, dadurch gekennzeichnet, daß sich das Isoliermaterial (14) unter dem Druck der bei Bestrahlung von den organischen Klumpen (18) erzeugten Gaskomponente örtlich vom Substrat (10) abtrennt und zwischen dem Substrat (10) und dem Isoliermaterial (14) unter Bildung des Höckers (20) ein Hohlraum (22) entsteht.

3. Aufzeichnungsmedium nach Anspruch 2, dadurch gekennzeichnet, daß der Höcker (20) auf der Aufzeichnungsschicht (12) gebildet wird, wenn die Strahlung von einer Oberfläche der Aufzeichnungsschicht (12) oder einer Oberfläche des Substrats (10) auf das Aufzeichnungsmedium auftrifft.

4. Aufzeichnungsmedium nach Anspruch 2, dadurch gekennzeichnet, daß die Metallklumpen (16) gleichzeitig mit dem Ablagern des Isoliermaterials (14) auf dem Substrat (10) eingebracht worden sind.

5. Aufzeichnungsmedium nach Anspruch 4, dadurch gekennzeichnet, daß die organischen Klumpen (18) gleichzeitig mit dem Ablagern des Isoliermaterials (14) auf dem Substrat (10) eingebracht worden ist.

6. Aufzeichnungsmedium nach Anspruch 5, dadurch gekennzeichnet, daß die Aufzeichnungsschicht (12) eine sich entsprechend einer Änderung des Gehalts an organischen Klumpen (18) im Isoliermaterial (14) ändernde Menge der Gaskomponente erzeugt.

7. Aufzeichnungsmedium nach Anspruch 5, dadurch gekennzeichnet, daß die Aufzeichnungsschicht (12) den Strahlungsenergie-Absorptionskoeffizienten in Abhängigkeit von einer Änderung des Gehalts an Metallklumpen (16) im Isoliermaterial (14) ändert.

8. Aufzeichnungsmedium nach Anspruch 7, dadurch gekennzeichnet, daß die Aufzeichnungsschicht (12) eine Menge an Gaskomponente erzeugt, die sich in Abhängigkeit von sowohl einer Änderung des Gehalts an organischem Klumpen (18) im Isoliermaterial (14) als auch einer Änderung des Strahlungsenergie-Absorptionskoeffizienten der Metallklumpen (16) ändert.

9. Aufzeichnungsmedium nach Ansprüchen 1 bis 8, dadurch gekennzeichnet, daß das Isoliermaterial (14) aus einem Metalloxid besteht.

10. Aufzeichnungsmedium nach Anspruch 9, dadurch gekennzeichnet, daß das Isoliermaterial (14) aus einem Indiumoxid besteht.

11. Aufzeichnungsmedium nach Ansprüchen 1 bis 8, dadurch gekennzeichnet, daß das Isoliermaterial aus einem Metallnitrid besteht.

12. Aufzeichnungsmedium nach Ansprüchen 1 bis 8, dadurch gekennzeichnet, daß das Isoliermaterial (14) aus einem Metallcarbonat besteht.

13. Verfahren zur Herstellung eines Aufzeichnungsmediums, auf dem in Abhängigkeit von Strahlung ein Höcker (20) formbar ist, wenn Strahlung einer sich entsprechend Aufzeichnungsinformation ändernden Intensität auf das Aufzeichnungsmedium fällt, gekennzeichnet durch folgende Schritte:
Einbringen eines Substrats (10) in eine gasförmige Atmosphäre niedrigen Drucks,
Anordnen eines dem Substrat (10) im wesentlichen gegenüberstehenden Targetkörpers (52, 70) in der gasförmigen Atmosphäre und
Durchführen einer Plasmazerstäubung durch Erzeugung eines Plasmas zwischen dem Targetkörper (52, 70) und dem Substrat (10), um auf dem Substrat eine einzelne Aufzeichnungsschicht (12) aus einem Isoliermaterial mit darin dispergierten Metallklumpen (16) und organischen Klumpen (18) abzulagern, wobei die Aufzeichnungsschicht (12) so ausgelegt ist, daß die Metallklumpen bei Bestrahlung Strahlungsenergie absorbieren, die organischen Klumpen (18) bei Erwärmung der Metallklumpen (16) aufgrund der Energieabsorption eine Gaskomponente erzeugen und das Isoliermaterial (14) bei Bestrahlung unter Bildung eines Höckers (20) örtlich angehoben wird.

14. Verfahren nach Anspruch 13, dadurch gekennzeichnet, daß der Targetkörper (52) eine Targetschicht (54) aus einem Isoliermaterial, mindestens ein auf der Targetschicht (54) angeordnetes Metallpellet (56) und mindestens ein auf der Targetschicht (54) angeordnetes organisches Pellet (58) umfaßt, wobei die Gehalte an in der Aufzeichnungsschicht (12) enthaltenen Metallklumpen (16) und organischen Klumpen (18) durch Änderung der Zahl der Metallpellets (56) und der Zahl der organischen Pellets (58) eingestellt werden.

15. Verfahren nach Anspruch 13, dadurch gekennzeichnet,
daß der Targetkörper (70) eine Targetschicht (72) aus einem Isoliermaterial und mindestens ein auf der Targetschicht (72) angeordnetes Metallpellet (74) umfaßt, wobei der Gehalt an in der Aufzeichnungsschicht (12) enthaltenen Metallklumpen (16) durch Änderung der Zahl der Metallpellets (74) eingestellt wird.

16. Verfahren nach Anspruch 13, dadurch gekennzeichnet, daß das Substrat (10) in der gasförmigen Atmosphäre drehbar gehaltert oder gelagert wird.

F I G. 1

F I G. 2

F I G. 3

# F I G. 4

RF
POWER
SUPPLY

# F I G. 5

56a

52

58a

54

VI

58b

VI

56b

# F I G. 7

VIII

74a

70

72

74b

VIII

# F I G. 6

58a    58b

54

60

# F I G. 8

74a    74b

72

76

EP 0 181 077 B1